Europäisches Patentamt

(19) European Patent Office

Office européen des brevets

(11) Publication number: **0 005 687**

A1

(12) # EUROPEAN PATENT APPLICATION

(21) Application number: **79850045.0**

(22) Date of filing: **17.05.79**

(51) Int. Cl.²: **H 04 M 7/10**
**H 04 Q 3/66, H 04 Q 3/00**

(30) Priority: **22.05.78 SE 7805826**

(43) Date of publication of application:
**28.11.79 Bulletin 79/24**

(84) Designated Contracting States:
**BE DE FR GB IT NL**

(71) Applicant: **TELEFONAKTIEBOLAGET L M ERICSSON**
**S-126 25 STOCKHOLM(SE)**

(72) Inventor: **Nordenberg, Erik Torbjörn**
**Gammelhagen 205**
**S-136 50 Handen(SE)**

(72) Inventor: **Lindén, Lars Kalle**
**Viaduktgatan 17**
**S-280 23 Hästveda(SE)**

(74) Representative: **Szemere, Fredrik et al,**
**Telefonaktiebolaget L M Ericsson Patent Department**
**S-126 25 Stockholm(SE)**

(54) Method of simplifying line selection in a telecommunication exchange in which the lines can be seized from this exchange as well as from a remote exchange.

(57) A method of simplifying line selection in a telecommunication exchange in which the lines can be seized by this exchange at one end as well as by a remote exchange at the other end. The lines which can be primarily selected by said first-mentioned exchange form a first group and the lines which can be primarily selected by the remote exchange form a second group.

Upon taking into use the exchanges the lines are selected arbitrarily, which also may comprise random selection among all lines. Upon being identified as idle the lines are stored in a first memory field in the order they have become idle, if they have been selected by the first mentioned exchange, and in a second memory field if they have been selected by the remote exchange.

If there are no idle lines in the first field, selection is made in the second field, and after the line selected from the second field has become idle it is stored in the first memory field.

METHOD OF SIMPLIFYING LINE SELECTION IN A TELECOMMUNICATION EXCHANGE
IN WHICH THE LINES CAN BE SEIZED FROM THIS EXCHANGE AS WELL AS FROM
A REMOTE EXCHANGE

FIELD OF INVENTION

The present invention relates to a method of simplifying line se-
lection in a telecommunication exchange in which the lines can be
seized from this exchange from one end of the line as well as from
a remote exchange from the other end of the line, and where the lines
selected primarily by the one of the exchanges form a first group and
the lines selected primarily by the other exchange form a second group,
when the number of primarily selectable lines does not meet the momentary need simultaneously as the selection in one exchange is independent of the principle of selection in the other exchange.

DESCRIPTION OF PRIOR ART

When selecting lines for connections between two exchanges it is usual
to select that line which has been idle the longest. This can be
realized in a simple manner in telecommunication exchanges where data
indicating the operation conditions on connection lines are stored
centrally, and are read out from the memory in question by means of
the connection line addresses. The occupation condition of the lines
is stored in the exchanges situated at either end of the lines. As
the selection of lines is generally made in the chronological order
in which the lines have earlier become idle, the coincidence of two
seizure attempts in opposite traffic directions is favoured on one
and the same connection line.

In order to prevent this, it has earlier been proposed to divide each
bundle of lines between two exchanges in two sub-bundles, one having
line-connection priority in one traffic direction and the other having
line-connection priority in the other traffic direction. The lines in
the sub-bundle intended to have incoming line-connection priority are
then only seized when all the lines in the sub-bundle for outgoing
connections are occupied.

The order in which the outgoing lines are selected can for example correspond to the order in which these lines have become idle, while the lines in the other sub-bundle can be selected in an order deviating from the order in which they have become idle at a previous release, avoiding in this manner that a line is seized in both traffic directions at the same time.

This known solution has disadvantages consisting in that each time a selection must be performed in the bundle intended for incoming lines, a special program is needed to perform such a selection, as the lines are normally allotted to one of the two bundles. Furthermore, the two exchanges connected with each other via the bundles of lines must work according to the same principle of selection when carrying out selection in their own bundle of lines in order to make a selection of the above mentioned type feasible.

SUMMARY OF THE INVENTION

The object of the invention is to provide a novel principle of line-selection process which eliminates the above-mentioned drawbacks, and which, to a great extent, reduces hunting among the lines belonging to the incoming bundle of lines and the extent of programming associated therewith by continuously adjusting the number of lines in the respective line groups to the actual traffic need and furthermore making the line selection in one exchange completely independent of the principle according to which the selection of lines is carried out in the remote exchange.

The characteristic features of the invention are apparent from the claim.

BRIEF DESCRIPTION OF THE DRAWINGS

An exemplary embodiment of the invention will now be described in detail while referring to the accompanying schematic drawing, illustrating the parts of an exchange, necessary to explain the principle of the invention.

PREFERRED EMBODIMENT

The letter N designates a selecting network, through which subscribers e.g. A and B, can be connected to another exchange via lines $l_1 - l_n$. A control device, designated D, carries out connection and disconnection of the telephone calls, and a memory M stores the seizure state of all the lines between the exchanges. From this memory the control device D can read what lines are idle or occupied for the time being and select an idle line for connection. The lines intended for primary selection at a given time by the first exchange are recorded in a first memory field F1, while the lines intended for simultaneous selection by the remote exchange are registered in another memory field F2.

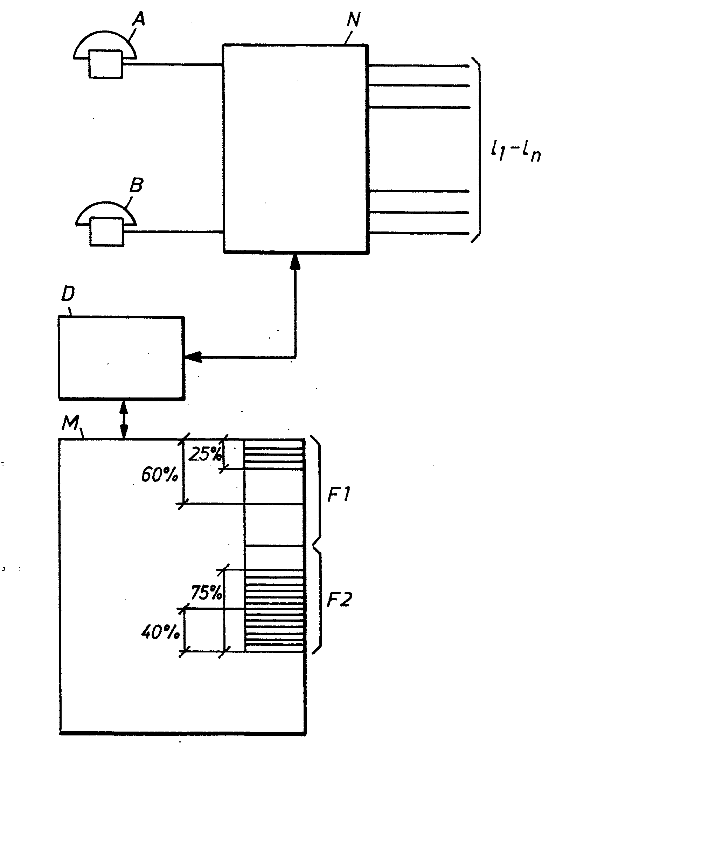

In accordance with the inventive concept the number of lines registered in the fields F1 and F2 vary according to the traffic need. At a given time, for example, traffic conditions require that at first hand the first exchange primarily has 25% of the lines at its disposal while the second or remote exchange has 75% of the lines at its disposal, as illustrated in the drawing. At another time, for example, traffic conditions may necessitate that 60% of the lines must primarily be at the disposal of the first exchange and 40% at that of the remote exchange, requiring that registration in the fields F1 and F2 is up-dated correspondingly.

When the exchanges are initially taken into use all lines are available for selection from both exchanges and the order of selection can be arbitrary. Investigations have shown that the danger of double calls is minimal, mainly because this state exists only once, i.e. when the exchange is taken into use.

When the lines which have been utilized when taking the exchange into use become idle, the exchange control device writes these into the memory field F1 in the same order in which they became idle, if they have been used for calls from the first exchange, and in the memory field F2 when they have been used for calls from the remote exchange. When all lines have been thus registered in one of the memory fields after starting the exchange, and a new line is required

this line is selected from the memory field F1 in the order in which the lines have become idle. If there is no idle line in the memory field F1, selection is made from the memory field F2, and this is done completely independent of the order in which the remote exchange selects its lines. It should be observed that as long as traffic conditions are unchanged, hunting for an idle line will be carried out in field F2 to a limited extent only in congestion conditions normal for telecommunication network. On the other hand, it will be necessary to select lines in the field F2 when the first exchange line requirement increases as a consequence of changed traffic conditions.

As an example it can be assumed that at a certain time 25% of the lines is registered in field F1 and 75% of the lines in field F2 due to the momentarily prevailing traffic conditions at a given time, e.g. just when the exchange is taken into use. If a greater number of lines is necessary for outgoing calls as a consequence of the traffic load, the exchange selects lines in field F2, and when such a line becomes idle it is registered in field F1. In response to further need, further lines are selected in field F2, and after these become idle, they are registered in field F1. After a given time a state of equilibrium is reached: e.g. 60% of the lines is registered in F1 and 40% in F2, so that the need of selection in the field F2 will be limited for a given time in advance.

A selection in the second line group does indeed result in an extra program step in the same way as in the known arrangements, but such selection occurs relatively seldom compared with a solution where each line is rigidly allotted to a respective exchange, since, in accordance with the invention, these lines are transferred to the first line group after having been unoccupied, and are subsequently selected directly when a new line is needed. The number of directly selectable lines has thus been adapted to the prevailing traffic load which can vary a few times every twenty-four hours. This method also renders unimportant the principle by which the remote exchange selects its lines, and the risk of double calls will be at a minimum, as practical experiments have shown. Of course, nothing prevents both the first and the remote exchanges from performing the selection according to the same principle.

0005687

6

WHAT WE CLAIM IS:

A method of simplifying line selection in a telecommunication exchange in which the lines can be seized at this first exchange from one end of the line as well as at a second or remote exchange from the other end of the line, and where the lines which are primarily selected by one of the exchanges form a first group and the lines which are primarily selected by the other exchange form a second group, when the number of selectable lines does not correspond to the momentary need simultaneously as the selection in the first exchange becomes independent of the principle of selection in the remote exchange, characterized in that the lines for the connections going out from the two exchanges when the exchanges are taken into use, unless it is otherwise determined as to which exchange the lines belong, are arbitrarily selected by the respective exchange, which also may include random selection among the lines not yet allotted to one of the exchanges, the lines identified as idle being written into a first memory field if they have been selected by the first exchange and into a second memory field if they have been selected by the remote exchange, in that on normal operation of the exchanges at least the first exchange selects from the first field those lines which have been idle the longest, if there are no idle lines in the first field selection is carried out in the second field, and subsequent to the line selected from the second field becoming idle, registering it in the first memory field.

1/1

| European Patent Office | EUROPEAN SEARCH REPORT | Application number<br>EP 79 85 0045 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.²) |
|---|---|---|---|
| X | US - A - 3 504 129 (EWIN)<br><br>* column 2, line 48 to column 3, line 17; column 6, lines 38 to 69 *<br><br>--- | single | H 04 M 7/10<br>H 04 Q 3/66<br>H 04 Q 3/00 |
| A | US - A - 2 769 864 (PARKS)<br><br>* column 1, lines 30 to 42 *<br><br>--- | single | |
| A | DE - B - 2 327 691 (SIEMENS)<br><br>* column 3, lines 27 to 55 *<br><br>---------- | single | **TECHNICAL FIELDS SEARCHED (Int.Cl.²)**<br><br>H 04 Q 3/..<br>H 04 M 7/10 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 08-08-1979 | VANDEVENNE |

EPO Form 1503.1   06.78